# EUROPEAN PATENT SPECIFICATION

(11) **EP 2 846 210 B1**
(45) Date of publication and mention of the grant of the patent: **02.08.2017**
(21) Application number: 14183268.3
(22) Date of filing: 02.09.2014
(51) Int. Cl.: G05D 16/16, F16K 31/128, F16K 31/42, G05D 16/20

(54) **PNEUMATIC DRIVEN PRESSURE REGULATOR**
DRUCKLUFTBETÄTIGTER DRUCKREGLER
RÉGULATEUR DE PRESSION À COMMANDE PNEUMATIQUE

(30) Priority: 06.09.2013 IT BS20130124
(43) Date of publication of application: 11.03.2015
(73) Proprietor: Camozzi S.p.A. Societa' Unipersonale, 25122 Brescia (IT)
(72) Inventor: Camozzi, Geromino, I-25122 BRESCIA (IT); Gnutti, Gianluca, I-25065 Lumezzane, BRESCIA (IT)
(74) Representative: Chimini, Francesco

(56) References cited:
- GB-A- 738 911
- GB-A- 860 671
- US-A- 3 572 359
- US-A- 4 176 677
- US-A- 4 586 533
- US-A- 4 917 144
- US-A- 5 762 102
- US-B1- 6 209 522

## Description

The present invention relates to a pressure regulator suitable for supplying a fluid at regulated pressure to a device operating with a pressurised fluid.

In particular, the invention may be advantageously applied to regulators with pneumatic driver, that is controlled under pressure.

As is known, a pressure regulator comprises a regulator body in which an entry duct connectable to a supply source of a pressurised fluid and an exit duct connectable to said device operating with a pressurised fluid, are made; a main valve seat is further made in the regulator body between the entry duct and the exit duct. A valve is axially movable between an open position and a closed position of said main valve seat to permit or interrupt the passage of fluid from the entry duct to the exit duct. A regulation membrane, subjected at the top to a driver pressure corresponding to the desired pressure and at the bottom to a pressure to be regulated, is operatively connected to said valve so that an increase in the driver pressure on the membrane causes an opening of the valve seat.

In a regulator of the manual control type, the driver pressure is given by a spring placed in a driver chamber, usually at atmospheric pressure, over the membrane. The load of the spring may be regulated acting manually on a regulation knob. Examples of such regulators are disclosed in US3572359, US4176677 and US4586533.

In the presence of an excess pressure under the membrane, for example caused by the return of a movement of a pneumatic actuator, the regulator reacts by discharging the overpressure through a bore made into the membrane; the excess pressure is transferred into the spring chamber and then exits into the environment through a bore obtained in the regulator body.

In a pressure controlled regulator, as for example in US-5762102, the driver pressure acting in a driver chamber on the upper side of the membrane is controlled by a pneumatic driver regulator comprising a fill valve, a discharge valve, and a control board which commands said fill and discharge valves to increase or reduce the pressure in the driver chamber on the basis of information relative to the pressure present in the exit duct of the regulator.

In another embodiment of the pressure controlled regulator, the driver pressure acting in a driver chamber on the upper side of the membrane may be controlled by a separate regulator of the manual or pneumatic type, the pressure of which exiting the same through an appropriate connection system is used as the pressure of the driver chamber of the pneumatic driver regulator.

In both types of pressure controlled regulator described, the discharge system described above cannot be applied since an overpressure would be placed over the membrane which would sum up to the driver pressure already present, altering it and jeopardising the desired regulation.

In order to discharge the excess pressure without altering the value of the driver pressure some discharge systems have been proposed. For example one embodiment envisages obtaining an "isolated" chamber between two membranes integral to each other; in this way, the driver pressure acts on the upper membrane, the regulated pressure on the lower membrane and the overpressure discharge is discharged in the middle chamber and then exits through a bore in the environment, thus without affecting the driver.

It is, however, clear that such technical solution implies greater complexity of the regulator and/or lesser sensitivity of regulation, due to the use of a double membrane.

Another embodiment envisages discharging the excess pressure through a discharge bore obtained in a stem associated to the valve and engaging the membrane. This solution necessarily requires the use of appropriate valves, having complex construction, and the isolation of such valves from the entry duct connected to a power supply of a pressurised fluid. The failed or defective isolation of the valve, in fact, leads to an increase in consumption of supply liquid and at the same time may lead to an alteration of the regulated pressure.

An object of the present invention is to propose a pneumatic driven regulator, capable of discharging the excess pressure without affecting the driver pressure and that at the same time is simple to make and therefore reliable and accurate.

Said object is achieved with a pressure regulator according to claim 1. The dependent claims describe preferred embodiments of the invention.

The features and the advantages of the pressure regulator according to the invention shall be made readily apparent from the following description of preferred embodiments thereof, provided purely by way of a non limiting example, with reference to the accompanying figures, wherein:
- Figures 1 and 1a show an axial cutaway view of the pressure regulator according to the invention in a condition of equilibrium, according to two different sectional planes orthogonal to each other;
- Figure 2 shows a cutaway view of the regulator at start-up or in a situation of increase in the regulated pressure;
- Figure 3 shows a cutaway view of the regulator in a condition of reduction of the regulated pressure or of discharge of an excess pressure; and
- Figure 4 shows an axial cutaway view, corresponding to the section of Figure 1a, of a regulator in an embodiment variation.

In said drawings, reference numeral 1; 100 globally indicates a pressure regulator according to the invention. In the following description, the elements common to the different embodiments described are indicated with the same reference numerals.

The regulator 1; 100 comprises a regulator body 10 in which an entry duct 12 connectable to a supply source of a pressurised fluid and an exit duct 14 connectable to a device operating with a pressurised fluid, for example a cylinder, are made;

In the regulator body 10 a main valve seat 16 is further made between the entry duct 12 and the exit duct 14. A main valve 18 is associated to said main valve seat 16, which is axially movable between an open position and a closed position of said main valve seat 16 to permit or interrupt the passage of fluid from the entry duct 12 to the exit duct 14.

In one embodiment, the entry 12 and exit 14 ducts are oriented according to directions parallel to each other, for example coaxial, while the main valve seat 16 has a seat axis orthogonal to said ducts.

In the following description, the terms "upper" and "lower" will refer to the pressure regulator mounted in the vertical position, as shown in the drawings, with the driver pressure regulation means positioned on top of the regulator body 10.

In a preferred embodiment, the movement of the main valve 18 from the closed position to the open position is a downward movement. The main valve 18 is influenced by elastic means, for example an helical spring 20, to take the closed position of the valve seat 16.

In the regulator body 10, for example in one upper portion thereof spaced apart from the entry 12 and exit 14 ducts and from the main valve seat 16, a membrane chamber 22 is obtained in which a regulation membrane 24 is accommodated. The outer peripheral edge of the membrane 24 is retained in an annular recess 26 obtained in an inner wall of the membrane chamber 22. For example, said annular recess 26 is obtained by coupling an upper portion 10' and a lower portion 10" of the regulator body 10. The membrane 24 and the upper portion of the membrane chamber define an upper driver chamber 28. The membrane 24 and the lower portion of the membrane chamber define a lower discharge chamber 30.

In one embodiment, the membrane 24 is retained between a pair of disc members 32, 34. In more detail, both the membrane 24 and the upper disc member 32 have a central opening wherein a central raised portion 34' of the lower disc member 34 is inserted.

The upper driver chamber 28 is suitable for receiving a fluid under a driver pressure. Such fluid under the driver pressure therefore acts on the upper side of the regulation membrane 24. The lower discharge chamber 30 is in fluidic communication with the exit duct 14.

It should be noted that in this specification "membrane" for simplicity means the entire assembly accommodated in the membrane chamber 22, including disc members or other supporting means of the membrane, which moves vertically downwards under the action of the pressurised fluid in the driver chamber 28 and upwards in the presence of an overpressure in the discharge chamber 30.

In accordance with an aspect of the invention, the lower discharge chamber 30 is in fluidic communication with the external environment by means of a discharge pipe 40. By means of said discharge pipe 40 it is therefore possible to discharge an excess pressure present in the exit duct 14.

In accordance with a general embodiment, the membrane 24 is operatively connected to the main valve 18 so that an increase in the driver pressure on the membrane causes an opening of the main valve seat 16.

Furthermore, a discharge obturator 50 suitable for preventing the passage of fluid through said discharge pipe 40 is operatively connected to the main valve 18 when the membrane 24 is in a condition of equilibrium or upon an increase of the driver pressure and to permit the passage of fluid through said discharge pipe 40 in the presence of excess pressure acting on the lower side of the membrane 24.

In a preferred embodiment, the membrane 24 is passed through by an axial discharge passage 42 having an upper portion opened in the driver chamber 20, the discharge pipe 40 being connected to said discharge passage upper portion. For example, said axial discharge passage 42 is obtained in the central projecting portion 34' of the lower disc member 34.

In a preferred embodiment, the discharge pipe 40 passes through the driver chamber 28 and reaches the atmosphere passing through a discharge bore 44 obtained in a wall of the regulator body which delimits an upper portion of the driver chamber 28. The discharge pipe end exiting the regulator body may be provided with a fitting 45.

Advantageously, the discharge pipe 40 has a body in a soft material, for example rubber, which does not prevent the regulation membrane from moving. The appropriate size selection of the fastening members of the discharge pipe and the appropriate selection of the materials of the pipe (which has to be very soft) and membrane allow the presence of the discharge pipe to not affect the axial movement of the membrane 24.

In a preferred embodiment, wherein the main valve seat 18 is coaxial to the regulation membrane 24, the discharge obturator 50 is axially constrained to the main valve 18 and has an upper end 52 suitable for sealingly engaging the lower portion of said axial passage 42.

In more detail, the discharge obturator 50 has an elongated rod-like shape which extends from the main valve 18 to the membrane 24. The lower end of the obturator may be shaped so as to hook snap-wise to the main valve 18. For example, said lower end has at least two end elastic arms 54 suitable for being inserted in an axial bore obtained in the main valve 18 and for engaging an undercut 18' present in the inner wall of such bore. The lower end of the obturator 50 may further have, in a more retracted position relative to said elastic arms 54, a thrust collar 56 suitable for contacting a flange portion 18" of the main valve 18.

In one embodiment, the upper end 52 of the obturator 50 has a convex shape and the lower portion of the axial bore 42 of the membrane 24 has a flared shape suitable for receiving said concave end 52 of the discharge obturator.

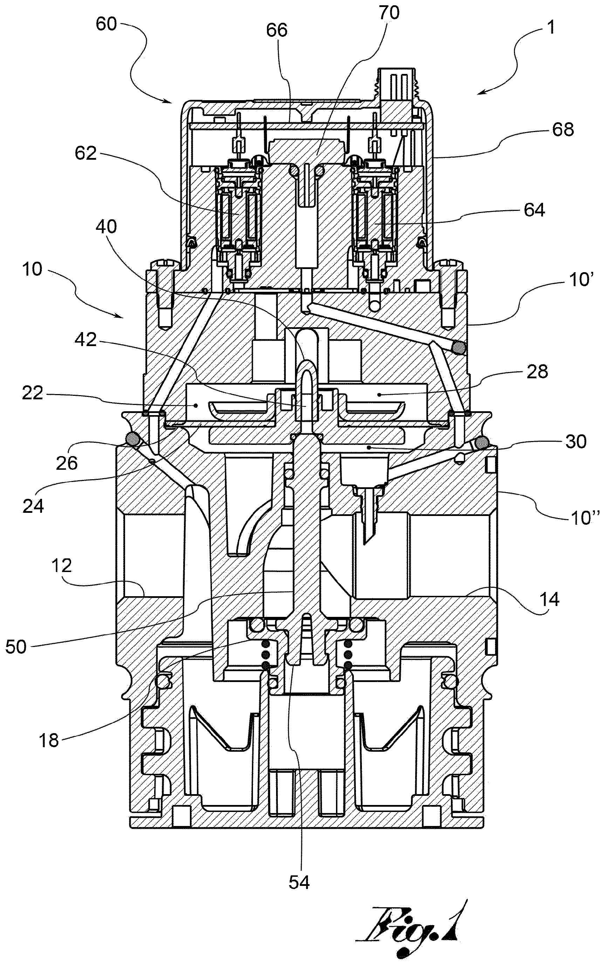

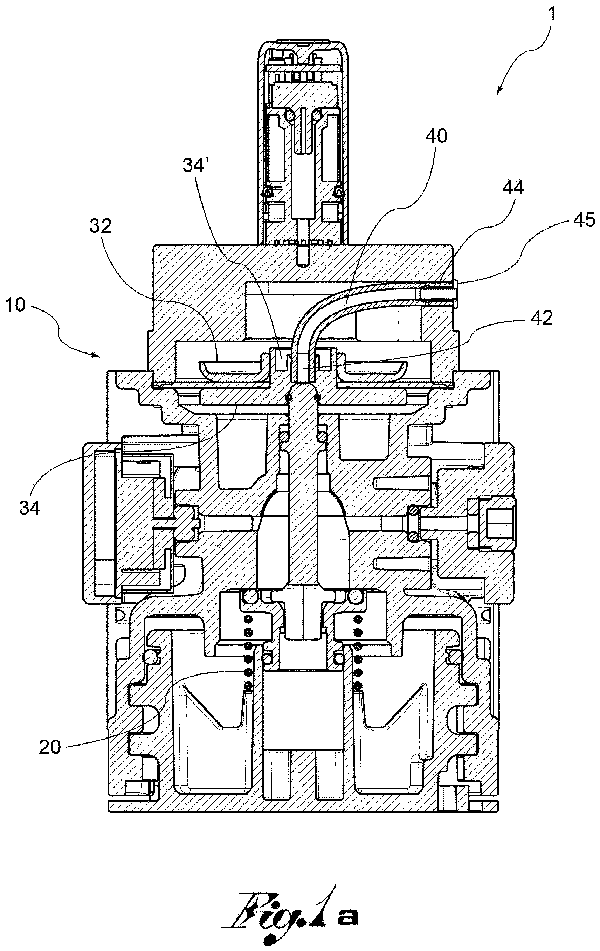

In a preferred embodiment illustrated in figures 1-3, the pressure in the driver chamber 28 is controlled by a pneumatic driver regulator 60 comprising a fill valve 62, a discharge valve 64, and an electronic control board 66 which commands said fill 62 and discharge 66 valves to increase or reduce the pressure in the driver chamber on the basis of information relative to the pressure present in the exit duct 14 of the regulator.

In a preferred embodiment, said pneumatic driver regulator 60 is applied to the regulator body 10. For example, as illustrated in the drawings, the driver regulator 60 is accommodated in a casing 68 fastened, for example by means of screws, to the top of the regulator body 10.

In one embodiment, the pneumatic driver regulator 60 comprises a pressure sensor 70 in fluidic connection with the exit duct 14 and operatively connected to the electronic control board 66.

For example, in the regulator body 10 a filler channel 72 fluidically connecting the entry duct 12 to the fill valve 62 and a pressure detection channel 74 fluidically connecting the exit duct 14 to the pressure sensor 70 are obtained.

Therefore, between the top of the regulator body 10 and the base of the pneumatic driver regulator 60 a pneumatic interface 76 is obtained which allows fluidically connecting the fill 62 and discharge 64 valves with the driver chamber 28, the entry duct 12 with the fill valve 62 and the exit duct 14 with the pressure sensor 70.

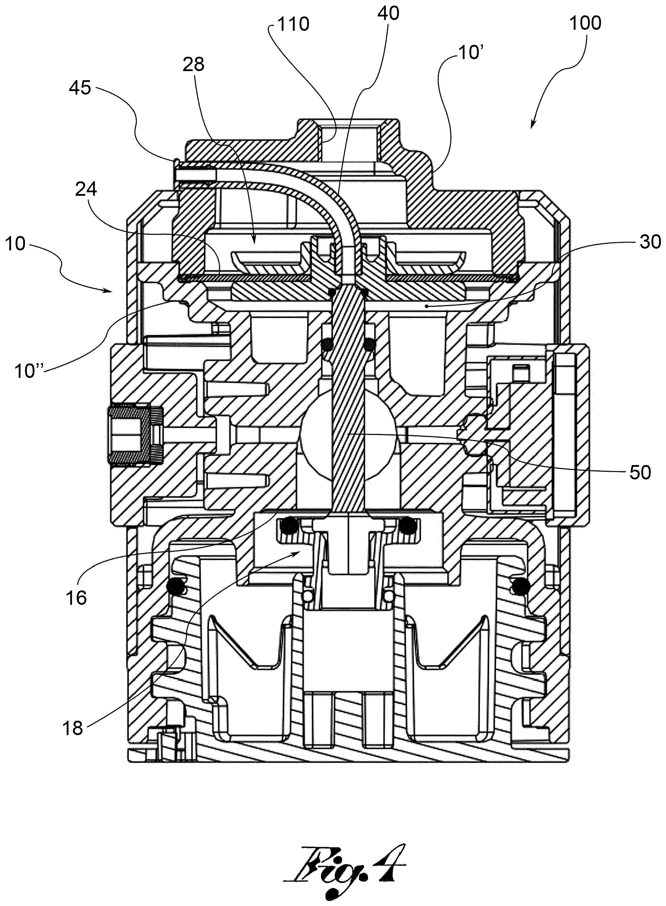

In a variation of embodiment illustrated in figure 4, the pressure in the driver chamber 28 is managed by a separate driver regulator of the manual or pneumatic type (not shown), located peripherally and connected to the pressure regulator 100 by appropriate connection systems. To this end, the upper portion 10' of the regulator body 10 is provided with a fitting 110 for the fluidic connection to the separate driver regulator and communicating with the driver chamber 28.

The pressure in the driver chamber 28 is directly controlled by the peripheral driver regulator, which intervenes by increasing or reducing the pressure in the driver chamber 28 on the basis of information relative to the pressure present downstream of the exit duct 14 of the regulator by means of appropriate pressure reading systems.

In this embodiment, the power supply means of the pressure regulator and of the driver regulator are independent.

The operation of the regulator will be briefly described hereinafter with particular reference to the embodiment with the driver regulator embedded.

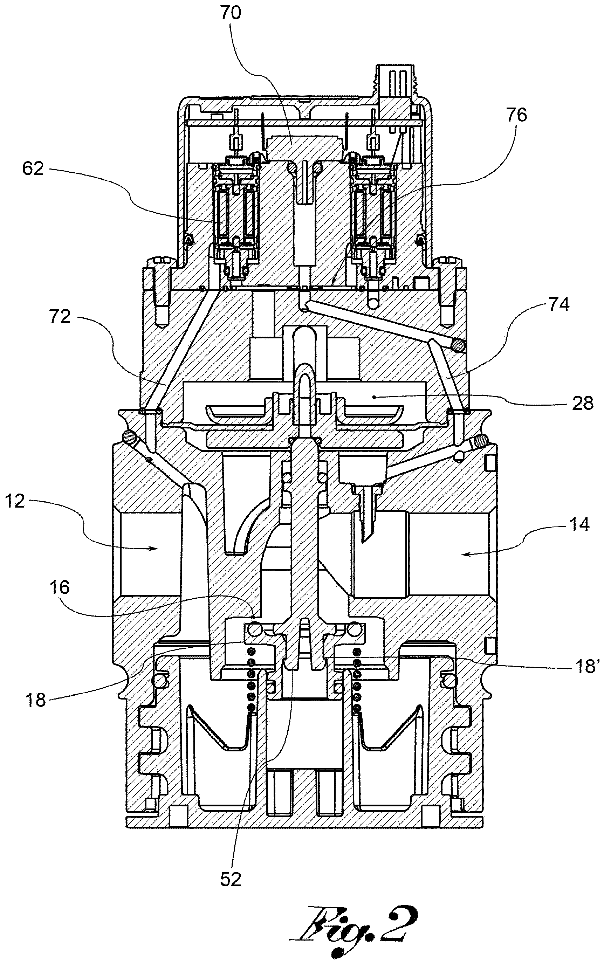

At start-up, in the entry duct 12 of the regulator body 10 there is a pressure applied upstream of the regulator. The main valve 18 is in a closed position of the main valve seat 16 and the input air only passes through the filler channel 72 towards the fill valve 62. The electronic control board 66 detects, thanks to the pressure sensor 70, a null pressure in the exit duct 14 of the regulator body. Therefore, the control board 66 starts to drive the fill valve 62, for example in the PWM mode, so as to increase the pressure in the driver chamber 28, that is above the membrane 24. As a result, the driver chamber is pressurised by moving the membrane 24, the discharge obturator 50 and the main valve 18 downwards. At this point, the passage between the entry duct 12 and the exit duct 14 opens and the output pressure starts to increase (figure 2). Once the desired pressure is achieved, the main valve reaches a position of equilibrium, as shown in figures 1 and 1a.

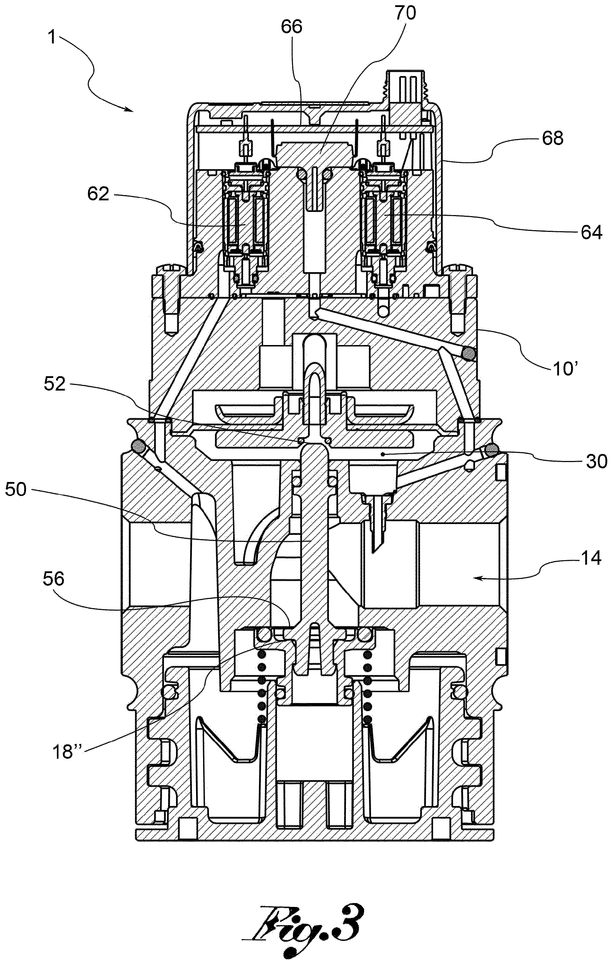

If the output pressure has to be changed, the electronic control board 66 commands the two fill 62 and discharge 64 valves to pressurise or discharge the driver chamber 28. If a pressure increase is required, the fill valve 62 is actuated and the regulator operates as in the situation of start-up described above. If, on the contrary, a reduction in the output pressure is required to the regulator, the discharge vale 64 is actuated which reduces the pressure inside the driver chamber 28. The membrane 24, as a result, moves upward allowing the excess pressure to be discharged through the discharge pipe 40 (figure 3) until reaching a new situation of equilibrium, wherein the discharge pipe 40 is closed again by the discharge obturator, due to the lowering of the membrane caused by the pressure reduction in the exit duct.

If an excess pressure (overpressure) occurs under the membrane instead, for example because of a return of a movement of a cylinder, the membrane 24 tends to move upwards detaching itself from the discharge obturator 50. Therefore, the regulator reacts by discharging the overpressure through the discharge pipe 40, without affecting the driver pressure of the fluid present in the driver chamber 28.

The regulator according to the invention allows attaining the intended objects of effecting a correct regulation of the excess pressure by a structure of the device particularly simple and made up of a small number of components, to the advantage of reliability and assembly operations.

Furthermore, frictions are reduced as compared to the technical solutions with double membrane and a high sensitivity is maintained in the regulation, since the thrusts of the regulated and driver air oppose each other.

Each of the features described as belonging to a possible embodiment can be obtained independently of the other embodiments described.

## Claims

1. Pneumatic driven pressure regulator (1; 100) for supplying a fluid at regulated pressure to a device operating with a pressurised fluid, the regulator comprising:
- a regulator body (10) in which an entry duct (12) connectable to a supply source of a pressurised fluid and an exit duct (14) connectable to said device operating with a pressurised fluid, are made;
- a main valve seat (16) made in the regulator body between the entry duct and the exit duct;
- a main valve (18) axially movable between an open position and a closed position of said main valve seat (16) to permit or interrupt the passage of fluid from the entry duct to the exit duct;
- a regulation membrane (24) placed in a membrane chamber (22) so as to define an upper driver chamber (28), suitable for receiving a fluid at a driver pressure, and a lower discharge chamber (30), in fluidic communication with the exit duct (14), said regulation membrane (24) being operatively connected to said main valve (18), so that an increase in the driver pressure on the membrane causes an opening of the main valve (18);
wherein the lower discharge chamber (30) is in fluidic communication with the external environment by means of a discharge pipe (40) for discharging the excess pressure in said lower discharge chamber (30) without affecting the driver pressure of the fluid present in the driver chamber (28),
and wherein a discharge obturator (50) is operatively connected to the main valve (18) preventing the passage of fluid through said discharge pipe (40) when the regulation membrane (24) is in a condition of equilibrium or upon an increase of the driver pressure and permitting the passage of fluid through said discharge pipe in the presence of excess pressure acting on the lower side of the membrane.

2. Regulator according to claim 1, wherein the regulation membrane (24) is passed through by an axial discharge passage (42) having an upper portion opened in the driver chamber (28), the discharge pipe (40) being connected to said upper portion of the discharge passage.

3. Regulator according to the previous claim, wherein the main valve seat (16) is coaxial to the regulation membrane (24), and wherein the discharge obturator (50) is axially constrained to the main valve (16) and has an upper end suitable for sealingly engaging the lower portion of said axial passage (42).

4. Regulator according to any of the previous claims, wherein the main valve (18) is elastically influenced to take the closed position of the main valve seat (16).

5. Regulator according to any of the previous claims, wherein the pressure in the driver chamber is controlled by a pneumatic driver regulator (60) comprising a fill valve (62), a discharge valve (64), and an electronic control board (66) which commands said fill and discharge valves to increase or reduce the pressure in the driver chamber on the basis of information relative to the pressure present in the exit duct of the regulator.

6. Regulator according to the previous claim, wherein said pneumatic driver regulator (60) is applied to the regulator body (10).

7. Regulator according to claim 5 or 6, wherein the pneumatic driver regulator (60) comprises a pressure sensor (70) in fluidic connection with the exit duct (14) and operatively connected to the electronic control board (66).

8. Regulator according to claim 6 or 7, wherein a filler channel (72) is made in the regulator body which fluidically connects the entry duct (12) with the fill valve (62).

9. Regulator according to claim 7 or 8, wherein a pressure detector channel (74) is made in the regulator body which fluidically connects the exit duct (14) with the pressure sensor (70).

10. Regulator according to any of the claims 1-4, wherein the pressure in the driver chamber (28) is controlled by a separate driver regulator of the manual or pneumatic type, which intervenes to increase or reduce the pressure in the driver chamber on the basis of information relative to the pressure present downstream of the exit duct (14), the regulator body being fitted with a fluidic connection fitting (110) to said separate driver regulator, said fitting (110) being in communication with the driver chamber (28).

11. Regulator according to any of the previous claims, wherein the discharge pipe (40) has a body in soft material which crosses the driver chamber (28) so as to permit the movements of the regulation membrane (24).

## Patentansprüche

1. Druckluftbetätigter Druckregler (1; 100) zum Zuführen eines Fluids mit reguliertem Druck zu einer Vorrichtung, welche mit einem druckbeaufschlagten Fluid arbeitet, wobei der Regler umfasst:
- ein Reglergehäuse (10), in welchem ein Eintrittskanal (12), welcher mit einer Versorgungsquelle eines druckbeaufschlagten Fluids verbindbar ist, und ein Austrittskanal (14), welcher mit der mit dem druckbeaufschlagten Fluid arbeitenden Vorrichtung verbindbar ist, ausgebildet sind;
- einen Hauptventilsitz (16), welcher zwischen dem Eintrittskanal und dem Austrittskanal in dem Reglerkörper ausgebildet ist;
- ein Hauptventil (18), welches zwischen einer offenen Stellung und einer geschlossenen Stellung des Hauptventilsitzes (16) in axialer Richtung bewegbar ist, um den Durchgang von Fluid von dem Eintrittskanal zu dem Austrittskanal zu ermöglichen oder zu unterbrechen;
- eine Reguliermembran (24), welche in einer Membrankammer (22) derart angeordnet ist, dass sie eine obere Betätigerkammer (28), welche dafür geeignet ist, ein Fluid mit einem Betätigerdruck aufzunehmen, und eine untere Auslasskammer (30) begrenzt, welche mit dem Austrittskanal (14) in Fluidverbindung steht, wobei die Reguliermembran (24) wirkungsmäßig mit dem Hauptventil (18) verbunden ist, sodass eine Erhöhung des Betätigerdrucks an der Membran ein Öffnen des Hauptventils (18) bewirkt;
wobei die untere Auslasskammer (30) mit der äußeren Umgebung durch ein Auslassrohr (40) in Fluidverbindung steht, welches den überschüssigen Druck in der unteren Auslasskammer (30) auslässt, ohne den Betätigerdruck des in der Betätigerkammer (28) vorhandenen Fluids zu beeinflussen,
und wobei ein Auslass-Absperrorgan (50) wirkungsmäßig mit dem Hauptventil (18) verbunden ist, welches den Durchgang von Fluid durch das Auslassrohr (40) verhindert, wenn sich die Reguliermembran (24) in einem Zustand der Ausgegleichenheit befindet, oder bei einer Erhöhung des Betätigerdrucks, und welches den Durchgang von Fluid durch das Auslassrohr bei Vorhandensein von überschüssigem Druck, welcher auf die untere Seite der Membran wirkt, erlaubt.

2. Regler nach Anspruch 1, wobei die Reguliermembran (24) von einem axialen Auslasskanal (42) durchlaufen ist, welcher einen in die Betätigerkammer (28) geöffneten oberen Abschnitt hat, wobei das Auslassrohr (40) mit dem oberen Abschnitt des Auslasskanals verbunden ist.

3. Regler nach dem vorhergehenden Anspruch, wobei der Hauptventilsitz (16) koaxial zu der Reguliermembran (24) ist und wobei das Auslass-Absperrorgan (50) axial an das Hauptventil (16) gedrängt ist und ein oberes Ende hat, welches zum abdichtenden Eingreifen mit dem unteren Abschnitt des axialen Kanals (42) geeignet ist.

4. Regler nach einem der vorhergehenden Ansprüche, wobei das Hauptventil (18) zum Einnehmen der geschlossenen Stellung des Hauptventilsitzes (16) elastisch beeinflusst ist.

5. Regler nach einem der vorhergehenden Ansprüche, wobei der Druck in der Betätigerkammer durch einen Druckluftbetätigerregler (60) geregelt wird, welcher ein Füllventil (52), ein Auslassventil (64) und eine elektronische Schalttafel (66) umfasst, welche das Füllventil und das Auslassventil zum Erhöhen oder Verringern des Drucks in der Betätigerkammer ausgehend von Informationen, die den in dem Austrittskanal des Reglers vorhandenen Druck betreffen, steuern.

6. Regler nach dem vorhergehenden Anspruch, wobei der Druckluftbetätigerregler (60) an dem Reglergehäuse 10) angebracht ist.

7. Regler nach Anspruch 5 oder 6, wobei der Druckluftbetätigerregler (60) einen Drucksensor (70) umfasst, welcher mit dem Austrittskanal (14) in Fluidverbindung steht und mit der elektronischen Schalttafel (66) wirkungsmäßig verbunden ist.

8. Regler nach Anspruch 6 oder 7, wobei in dem Reglergehäuse ein Füllkanal (72) ausgebildet ist, welcher den Eintrittskanal (12) strömungstechnisch mit dem Füllventil (62) verbindet.

9. Regler nach Anspruch 7 oder 8, wobei in dem Reglergehäuse ein Druckdetektorkanal (74) ausgebildet ist, welcher den Austrittskanal (14) strömungstechnisch mit dem Drucksensor (70) verbindet.

10. Regler nach einem der Ansprüche 1 bis 4, wobei der Druck in der Betätigerkammer (28) durch einen separaten Betätigerregler der manuellen oder der pneumatischen Art geregelt ist, welcher eingreift, um den Druck in der Betätigerkammer ausgehend von Informationen, welche den stromabwärts des Austrittskanals (14) herrschenden Druck betreffen, zu erhöhen oder zu verringern, wobei das Reglergehäuse mit einem Fluidverbindungsanschluss (110) an den separaten Betätigerregler angeschlossen ist, wobei der Anschluss (110) mit der Betätigerkammer (28) in Verbindung steht.

11. Regler nach einem der vorhergehenden Ansprüche, wobei das Auslassrohr (40) ein Gehäuse aus weichem Material hat, welches die Betätigerkammer (28) kreuzt, sodass es die Bewegung der Reguliermembran (24) zulässt.

## Revendications

1. Régulateur de pression à commande pneumatique (1 ; 100) pour fournir un fluide à une pression régulée à un dispositif fonctionnant avec un fluide pressurisé, le régulateur comprenant :
- un corps de régulateur (10), dans lequel un conduit d'entrée (12) pouvant être relié à une source d'alimentation d'un fluide pressurisé et un conduit de sortie (14) pouvant être relié audit dispositif fonctionnant avec un fluide pressurisé sont réalisés ;
- un siège de valve principale (16) réalisé dans le corps de régulateur entre le conduit d'entrée et le conduit de sortie ;
- une valve principale (18) mobile axialement entre une position ouverte et une position fermée dudit siège de valve principale (16) pour permettre ou interrompre le passage de fluide depuis le conduit d'entrée au conduit de sortie ;
- une membrane de régulation (24) placée dans une chambre de membrane (22) de sorte à définir une chambre d'entraînement supérieure (28), adaptée pour recevoir un fluide à une pression d'entraînement, et une chambre d'évacuation inférieure (30) en communication fluidique avec le conduit de sortie (14), ladite membrane de régulation (24) étant reliée en fonctionnement à ladite valve principale (18) de sorte qu'une augmentation de pression d'entraînement sur la membrane entraîne une ouverture de la valve principale (18) ;
dans lequel la chambre d'évacuation inférieure (30) est en communication fluidique avec l'environnement externe à l'aide d'un tuyau d'évacuation (40) pour l'évacuation de la pression en excès dans ladite chambre d'évacuation inférieure (30) sans affecter la pression d'entraînement du fluide présent dans la chambre d'entraînement (28),
et dans lequel un obturateur d'évacuation (50) est relié fonctionnellement à la valve principale (18) empêchant le passage de fluide par ledit tuyau d'évacuation (40) lorsque la membrane de régulation (24) est dans une condition d'équilibre ou suite à une augmentation de la pression d'entraînement et permettant le passage de fluide par ledit tuyau d'évacuation en présence de pression en excès agissant sur le côté inférieur de la membrane.

2. Régulateur selon la revendication 1, dans lequel la membrane de régulation (24) est traversée par un passage d'évacuation axiale (42) présentant une partie supérieure ouverte dans la chambre d'entraînement (28), le tuyau d'évacuation (40) étant relié à ladite partie supérieure du passage d'évacuation.

3. Régulateur selon la revendication précédente, dans lequel le siège de valve principale (16) est coaxial à la membrane de régulation (24), et dans lequel l'obturateur d'évacuation (50) est axialement contraint par rapport à la valve principale et présente une extrémité supérieure adaptée pour engager de manière étanche la partie inférieure dudit passage axial (42).

4. Régulateur selon l'une quelconque des revendications précédentes, dans lequel la valve principale (18) est élastiquement influencée pour prendre la position fermée du siège de valve principale (16).

5. Régulateur selon l'une quelconque des revendications précédentes, dans lequel la pression dans la chambre d'entraînement est commandée par un régulateur d'entraînement pneumatique (60) comprenant une valve de remplissage (62), une valve d'évacuation (64) et une carte de commande électronique (66) qui commande lesdites valves de remplissage et d'évacuation pour augmenter ou réduire la pression dans la chambre d'entraînement sur la base d'informations relatives à la pression présente dans le conduit de sortie du régulateur.

6. Régulateur selon la revendication précédente, dans lequel ledit régulateur d'entraînement pneumatique (60) est appliqué au corps de régulateur (10).

7. Régulateur selon la revendication 5 ou 6, dans lequel le régulateur d'entraînement pneumatique (60) comprend un capteur de pression (70) en connexion fluidique avec le conduit de sortie (14) et relié fonctionnellement à la carte de commande électronique (66).

8. Régulateur selon la revendication 6 ou 7, dans lequel un canal de remplissage (72) est réalisé dans le corps de régulateur qui relie fluidiquement le conduit d'entrée (12) à la valve de remplissage (62).

9. Régulateur selon la revendication 7 ou 8, dans lequel un canal de détecteur de pression (74) est réalisé dans le corps de régulateur qui relie fluidiquement le conduit de sortie (14) au capteur de pression (70).

10. Régulateur selon l'une quelconque des revendications 1 à 4, dans lequel la pression dans la chambre d'entraînement (28) est commandée par un régulateur d'entraînement séparé du type manuel ou pneumatique, qui intervient pour augmenter ou réduire la pression dans la chambre d'entraînement sur la base d'informations relatives à la pression présente en aval du conduit de sortie (14), le corps de régulateur étant doté d'un raccord de connexion fluidique (110) avec ledit régulateur d'entraînement séparé, ledit raccord (110) étant en communication avec la chambre d'entraînement (28).

11. Régulateur selon l'une quelconque des revendications précédentes, dans lequel le tuyau d'évacuation (40) présente un corps en matériau mou qui traverse la chambre d'entraînement (28) de sorte à permettre les mouvements de la membrane de régulation (24).
